(19) Europäisches Patentamt
European Patent Office
Office européen des brevets

(11) **EP 4 037 895 B1**

(12) **EUROPÄISCHE PATENTSCHRIFT**

(45) Veröffentlichungstag und Bekanntmachung des Hinweises auf die Patenterteilung:
**16.08.2023   Patentblatt 2023/33**

(21) Anmeldenummer: **20775333.6**

(22) Anmeldetag: **25.09.2020**

(51) Internationale Patentklassifikation (IPC):
*B29C 71/00* (2006.01)    *B29C 71/02* (2006.01)
*B29C 64/188* (2017.01)   *B29C 64/35* (2017.01)
*B33Y 40/20* (2020.01)    *B33Y 70/00* (2020.01)

(52) Gemeinsame Patentklassifikation (CPC):
**B29C 71/0009; B29C 64/188; B29C 64/35; B29C 71/02; B33Y 40/20; B33Y 70/00**

(86) Internationale Anmeldenummer:
**PCT/EP2020/076828**

(87) Internationale Veröffentlichungsnummer:
**WO 2021/063806 (08.04.2021 Gazette 2021/14)**

(54) **VERFAHREN ZUR MODIFIZIERUNG EINES 3D-GEDRUCKTEN GEGENSTANDS**

METHOD FOR MODIFYING A 3D PRINTED OBJECT

PROCÉDÉ DE MODIFICATION D'UN OBJET IMPRIMÉ EN 3D

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.09.2019   EP 19200320**

(43) Veröffentlichungstag der Anmeldung:
**10.08.2022   Patentblatt 2022/32**

(73) Patentinhaber: **Covestro Intellectual Property GmbH & Co. KG**
**51373 Leverkusen (DE)**

(72) Erfinder:
• **ACHTEN, Dirk**
  **51375 Leverkusen (DE)**
• **METTMANN, Bettina**
  **50259 Pulheim (DE)**
• **BÜSGEN, Thomas**
  **51377 Leverkusen (DE)**
• **KESSLER, Michael**
  **51377 Leverkusen (DE)**

(74) Vertreter: **Davepon, Björn**
**Patentanwaltskanzlei Davepon**
**Schloss Dyck**
**41363 Jüchen (DE)**

(56) Entgegenhaltungen:
**WO-A1-2018/111548     US-A1- 2017 173 872**

**Beschreibung**

Die vorliegende Erfindung betrifft ein Verfahren zur Modifizierung eines Gegenstands, welcher wenigstens teilweise aus einem ein thermoplastisches Polyurethan umfassenden Aufbaumaterial aufgebaut ist. Die Erfindung betrifft weiterhin einen nach dem Verfahren modifizierten Gegenstand.

Es ist bekannt, Kunststoffgegenstände in einem additiven Fertigungsverfahren, beispielsweise in einem Pulversinterverfahren, herzustellen, wobei die Gegenstände schichtweise aufgebaut werden. Die additiven Fertigungsverfahren werden auch als 3D-Druckverfahren ("3D printing") bezeichnet. Als Ausgangsmaterial für die in einem 3D-Druckverfahren herzustellenden Gegenstände können etwa Polyamide oder thermoplastisches Polyurethan verwendet werden. Die Verwendung derartiger Kunststoffe für die Herstellung von Kunststoffgegenständen in einem 3D-Druckverfahren hat den Nachteil, dass die Oberfläche der Gegenstände porös ist und damit einerseits einem erhöhten Verschleiß unterliegt und andererseits durch die poröse Oberflächenstruktur Schmutz verhältnismäßig leicht an der Oberfläche haften bleibt. Die Ästhetik des Gegenstandes kann so erheblich beeinträchtigt werden. Darüber hinaus kann die poröse Oberfläche der Gegenstände die Haptik negativ beeinflussen. Ferner können die Gegenstände je nach verwendetem Druckmaterial Wasser bzw. Feuchtigkeit aufnehmen, was die Struktur und/oder die Stabilität der Gegenstände negativ beeinflussen kann.

WO 2018/095967 A1 betrifft ein integriertes additives Herstellungsverfahren, mit dem die Haptik des hergestellten Gegenstands bei gleichzeitig verbesserter Haftung seiner Beschichtung verbessert wird. Dieses Verfahren zur Herstellung eines zumindest teilweise beschichteten Gegenstands umfasst den Schritt der Herstellung des Gegenstands mittels eines additiven Fertigungsverfahrens aus einem Aufbaumaterial, wobei das Aufbaumaterial ein thermoplastisches Polyurethan-Material umfasst. Der Gegenstand wird zumindest teilweise mit einer Zubereitung kontaktiert, welche ausgewählt ist aus: wässrige Polyurethan-Dispersion, wässrige Dispersion eines OH-Gruppen aufweisenden Polymers, wobei diese Dispersion weiterhin eine NCO-Gruppen aufweisende Verbindung enthält, wässrige Zubereitung einer NCO-Gruppen enthaltende Verbindung, wobei diese Zubereitung keine OH-Gruppen aufweisenden Polymere enthält oder eine Kombination aus mindestens zwei hiervon.

Bei kostensensitiven Anwendungsfällen kann sich das in WO 2018/095967 A1 beschriebene Verfahren als weniger geeignet erweisen, da beispielsweise die wässrige Polyurethan-Dispersion Mehrkosten bedingt.

WO 2017/196330 A1 offenbart ein 3D-Druckverfahren, umfassend das Auftragen eines polymeren Aufbaumaterials, das selektive Auftragen eines Fusionsmittels auf wenigstens einen Abschnitt des polymeren Aufbaumaterials und das selektive Auftragen eines mechanischen Veränderungsmittels auf wenigstens eine Region dieses Abschnitts. Das polymere Aufbaumaterial wird bestrahlt, so dass der Abschnitt des Aufbaumaterials mit dem Fusionsmittel zu einer Schicht fusioniert. Das mechanische Veränderungsmittel bildet in der Region eine zusammengesetzte Schicht. Diese zusammengesetzte Schicht unterscheidet sich in einer mechanischen Eigenschaft von der fusionierten Schicht, welche nicht mit dem mechanischen Veränderungsmittel in Kontakt kam. Gemäß einer Ausführungsform kann das mechanische Veränderungsmittel eine Weichmacherflüssigkeit mit einem Weichmacher sein und die zusammengesetzte Schicht weist eine höhere Duktilität auf als die fusionierte Schicht, welche nicht mit dem mechanischen Veränderungsmittel in Kontakt kam. Die Weichmacherflüssigkeit kann einen Weichmacher und ein Lösungsmittel enthalten. Sowohl als Beispiel für einen Weichmacher als auch für ein Lösungsmittel wird Dimethylsulfoxid (DMSO) genannt. Aceton wird ferner als Beispiel für ein Lösungsmittel genannt.

WO 2018/119026 beschreibt ein Verfahren zur Herstellung eines Gegenstands, umfassend die Schritte: (i) Bereitstellen einer druckbaren Zusammensetzung umfassend (a) 1 bis 50 Gewichts-%, einschließlich, eines Polymers, (b) 5 bis 50 Gewichts-%, einschließlich, einer polymerisierbaren Komponente, (c) 10 bis 80 Gewichts-%, einschließlich, eines temporären Lösungsmittels, (d) 0.1 bis 5 Gewichts-%, einschließlich, eines Photoinitiators und (e) einen optionalen Inhibitor in einer Menge von 0.001 bis 1 Gewichts-%, einschließlich; (ii) selektives Aushärten der druckbaren Zusammensetzung unter Bildung eines Gelkörpers; (iii) wenigstens teilweises Entfernen des temporären Lösungsmittels aus dem Gelkörper und (iv) optionales Aushärten von unpolymerisierten Resten polymerisierbarer Zusammensetzung, die vor oder nach Schritt (iii) vorliegen.

US 2017/173872 A1 offenbart ein Verfahren zum Bilden eines dreidimensionalen Objekts, wobei das Verfahren einen Reinigungs- oder Waschschritt umfasst, welches ausgeführt wird durch: (a) Bereitstellen eines Trägers und eines Füllstands und optional eines optisch transparenten Elements mit einer Aufbauoberfläche, die den Füllstand definiert, wobei der Träger und die Füllhöhe dazwischen einen Aufbaubereich aufweisen; (b) Füllen des Aufbaubereichs mit einer polymerisierbaren Flüssigkeit, wobei die polymerisierbare Flüssigkeit eine Mischung aus (i) einer durch Licht polymerisierbaren flüssigen ersten Komponente und (ii) einer zweiten verfestigbaren Komponente, die sich von der ersten Komponente unterscheidet, umfasst; (c) Bestrahlen des Aufbaubereichs mit Licht, um ein festes Polymergerüst aus der ersten Komponente zu bilden, und auch Vorschieben des Trägers weg von der Aufbauoberfläche, um ein dreidimensionales Zwischenprodukt zu bilden, das die gleiche Form wie oder eine zu verleihende Form hat das dreidimensionale Objekt und die zweite verfestigbare Komponente enthält, die in dem Gerüst in unverfestigter und/oder ungehärteter Form vorliegt; (d) Waschen des dreidimensionalen Zwischenprodukts; und (e) gleichzeitig mit oder nach dem Bestrahlungsschritt und/oder dem Waschschritt: Verfestigen und/oder Härten der zweiten verfestigbaren Komponente in dem dreidimensionalen Zwischenprodukt, um das dreidimensionale Objekt zu bilden.

Die vorliegende Erfindung hat sich die Aufgabe gestellt, einen thermoplastisches Polyurethan (TPU) enthaltenden Gegenstand derart zu modifizieren, dass wenigstens die TPU aufweisenden Abschnitte des Gegenstands verbesserte mechanische Eigenschaften und eine haptisch angenehmere, insbesondere glattere, Oberfläche aufweisen.

Erfindungsgemäß gelöst wird die Aufgabe durch ein Verfahren gemäß Anspruch 1 und einen Gegenstand gemäß Anspruch 14. Vorteilhafte Weiterbildungen sind in den Unteransprüchen angegeben. Sie können beliebig kombiniert werden, sofern sich aus dem Kontext nicht eindeutig das Gegenteil ergibt.

Ein Verfahren zur Modifizierung eines Gegenstands umfasst den Schritt:

I) Bereitstellen eines Gegenstandes, welcher wenigstens teilweise aus einem ein thermoplastisches Polyurethan umfassenden Aufbaumaterial aufgebaut ist.

Das Verfahren umfasst weiterhin die Schritte:

II) zumindest teilweises Kontaktieren des Aufbaumaterials, für eine erste vorbestimmte Zeitdauer, mit einer ersten Flüssigkeit, welche zu ≥ 80 Gewichts-%, bezogen auf das Gesamtgewicht der ersten Flüssigkeit, ein polar-aprotisches Lösungsmittel enthält;

III) Kontaktieren, für eine zweite vorbestimmte Zeitdauer, der in Schritt II) mit der ersten Flüssigkeit kontaktieren Bereiche des Aufbaumaterials mit einer zweiten Flüssigkeit, welche zu ≥ 80 Gewichts-%, bezogen auf das Gesamtgewicht der zweiten Flüssigkeit, ein polar-protisches Lösungsmittel enthält.

Ein durch das erfindungsgemäße Verfahren modifizierter Gegenstand weist an den das Aufbaumaterial enthaltenden Abschnitten eine glattere Oberfläche als ein entsprechender unmodifizierter Gegenstand auf. Ebenso werden die Zugfestigkeit und die Reißdehnung gegenüber dem unbehandelten Aufbaumaterial erhöht.

Es hat sich weiterhin überraschend gezeigt, dass trotz einer Quellwirkung, welche die erste Flüssigkeit wie zum Beispiel DMSO auf das Aufbaumaterial ausüben kann, die erste Flüssigkeit durch die zweite Flüssigkeit wie zum Beispiel Wasser in solch einem Ausmaß von dem Gegenstand wieder entfernt werden kann, dass die erste Flüssigkeit mit einen Gewichtsanteil von < 5%, bevorzugt < 3%, besonders bevorzugt < 1% und ganz besonders bevorzugt < 0,5% (jeweils bezogen auf das Gesamtgewicht des Aufbaumaterials) als Rückstand im modifizierten Gegenstand verbleibt.

Das thermoplastische Polyurethan ist vorzugsweise elastisch, das heißt, dass es eine Bruchdehnung im Zugversuchstest nach DIN 53504 von ≥ 50% zeigt. Darüber hinaus kann das Material beispielsweise einen Druckverformungsrest nach 25% Kompression (DIN 53517) von absolut ≤ 10% aufweisen.

Ein geeignetes thermoplastisches Polyurethanelastomer kann aus der Reaktion wenigstens der folgenden Komponenten erhalten werden:

a) mindestens ein organisches Diisocyanat, vorzugsweise 1,6-Hexamethylendiisocyanat, 1,4-Cyclohexandiisocyanat, Isophorondiisocyanat, Dicyclohexylmethandiisocyanat, Diphenylmethandiisocyanat-Isomerengemische, 4,4'-Diphenylmethandiisocyanat, 1,5-Naphthylendiisocyanat und Mischungen aus mindestens zwei der vorgenannten Komponenten;

b) mindestens eine Verbindung mit gegenüber Isocyanatgruppen reaktiven Gruppen, mit einem zahlenmittleren Molekulargewicht ($M_n$) von ≥ 500 g/mol bis ≤ 6000 g/mol und einer zahlenmittleren Funktionalität der Gesamtheit der Komponenten unter b) von ≥ 1,8 bis ≤ 2,5, vorzugsweise Polyesterpolyole, Polyetherpolyole, Polycarbonatpolyole, Polyesterpolyamide und Mischungen aus mindestens zwei der vorgenannten Komponenten;

c) mindestens ein Kettenverlängerungsmittel mit einem Molekulargewicht ($M_n$) von 60 - 450 g/mol und einer zahlenmittleren Funktionalität der Gesamtheit der Kettenverlängerungsmittel unter c) von 1,8 bis 2,5, vorzugsweise Ethandiol, 1,4-Butandiol, 1,6-Hexandiol, 1,4-Di(β-hydroxyethyl)-hydrochinon, 1,4-Di(β-hydroxyethyl)-bisphenol A und Mischungen aus mindestens zwei der vorgenannten Komponenten.

Die Herstellung des Gegenstands, welcher in Schritt I) bereitgestellt wird, ist vorzugsweise vor Schritt I) bereits abgeschlossen. Die Schritte II) und III) werden dann nicht intermediär während beispielsweise eines 3D-Drucks angewandt, sondern erst danach.

Gemäß Schritt II) des Verfahrens wird das Aufbaumaterial zumindest teilweise für eine erste vorbestimmte Zeitdauer mit einer ersten Flüssigkeit kontaktiert. Diese erste Flüssigkeit enthält ≥ 80 Gewichts-%, vorzugsweise ≥ 80 Gewichts-% bis ≤ 100 Gewichts-% und mehr bevorzugt ≥ 95 Gewichts-% bis ≤ 100 Gewichts-% (jeweils bezogen auf das Gesamtgewicht der ersten Flüssigkeit) eines polar-aprotischen Lösungsmittels. Hierunter fallen Verbindungen mit wenig aciden H-Atomen, vergleichsweise hohen Dielektrizitätskonstanten und vergleichsweise hohen Dipolmomenten. Beispiele für polar-aprotische Lösungsmittel sind Dichlormethan, N-Methylpyrrolidon, Tetrahydrofuran, Ethylacetat, Aceton, N,N-Dimethylformamid, Acetonitril, Dimethylsulfoxid, Methylethylketon und Propylencarbonat. Mischungen aus wenigstens zwei der vorgenannten Lösungsmittel sind ebenfalls denkbar.

Die erste vorbestimmte Zeitdauer kann im Bereich von Sekunden oder Minuten liegen. Beispielsweise kann sie $\geq$ 1 Sekunde bis $\leq$ 30 Minuten betragen. Ohne auf eine Theorie festgelegt zu sein wird angenommen, dass die erste Flüssigkeit wenigstens in oberflächennahe Bereiche des kontaktierten Gegenstands eindringt und dort über Quellungs- und partiellen Lösungsvorgängen eine Glättung und Verfestigung herbeiführt.

Gemäß Schritt III) des Verfahrens werden die in Schritt II) mit der ersten Flüssigkeit kontaktierten Bereiche des Aufbaumaterials für eine zweite vorbestimmte Zeitdauer mit einer zweiten Flüssigkeit kontaktiert. Diese zweite Flüssigkeit enthält $\geq$ 80 Gewichts-%, vorzugsweise $\geq$ 80 Gewichts-% bis $\leq$ 100 Gewichts-% und mehr bevorzugt $\geq$ 95 Gewichts-% bis $\leq$ 100 Gewichts-% (jeweils bezogen auf das Gesamtgewicht der ersten Flüssigkeit) eines polar-protischen Lösungsmittels. Das Kontaktieren muss nicht auf diejenigen Bereiche beschränkt sein, welche zuvor mit der ersten Flüssigkeit in Kontakt gebracht wurden. Zur Vereinfachung des Verfahrens kann es beispielsweise vorgesehen sein, dass der gesamte Gegenstand in die zweite Flüssigkeit eingetaucht wird oder unter einer fließenden zweiten Flüssigkeit (zum Beispiel fließendem Wasser) abgespült wird. Beispiele für geeignete polar-protische Lösungsmittel sind Ameisensäure, n-Butanol, n-Propanol, Isopropanol, Nitromethan, Ethanol, Methanol, Essigsäure und Wasser.

Die zweite vorbestimmte Zeitdauer kann im Bereich von Sekunden oder Minuten liegen. Beispielsweise kann sie $\geq$ 1 Sekunde bis $\leq$ 30 Minuten betragen.

Nach Schritt III) kann der Gegenstand beispielsweise durch Trocknen bei Raumtemperatur, durch Trocknen bei erhöhter Temperatur, durch Anlegen eines Vakuums, durch Kontaktieren mit einem saugfähigen Gegenstand oder durch eine Kombination dieser Maßnahmen von anhaftenden Resten der zweiten Flüssigkeit befreit werden.

Die Schritte II) und/oder III) können mehrmals durchgeführt werden. Es ist sowohl möglich, wiederholt die Sequenz aus II) und III) zu wiederholen als auch, unabhängig voneinander, mehrmals II) und/oder mehrmals III) durchzuführen. Vorzugsweise verringert sich in den einzelnen Schritten II) und/oder III) der Siedepunkt der ersten beziehungsweisen zweiten Flüssigkeit. So kann in einem ersten Schritt II) DMSO als erste Flüssigkeit und in einem zweiten Schritt II) Aceton als erste Flüssigkeit eingesetzt werden.

Gemäß einer Ausführungsform des Verfahrens ist das polar-aprotische Lösungsmittel in der ersten Flüssigkeit Aceton, Methylethylketon, Dimethylsulfoxid oder deren Mischung.

Gemäß einer weiteren Ausführungsform des Verfahrens enthält die erste Flüssigkeit weiterhin Wasser, ein Polyisocyanat, ein Polyol oder eine Mischung aus mindestens zwei der vorgenannten Komponenten. Auf diese Weise lässt sich dort, wo die erste Flüssigkeit den Gegenstand kontaktiert und in den Gegenstand eingedrungen ist, eine Nachvernetzung im Polyurethan-Material erreichen. Urethanisierungskatalysatoren können ebenfalls in der ersten Flüssigkeit vorliegen. Als Polyisocyanate kommen vorzugsweise 1,6-Hexamethylendiisocyanat, 1,4-Cyclohexandiisocyanat, Isophorondiisocyanat, Dicyclohexylmethandiisocyanat, Diphenylmethandiisocyanat-Isomerengemische, 4,4'-Diphenylmethandiisocyanat, 1,5-Naphthylendiisocyanat, sowie Polyisocyanate erhältlich aus der Reaktion von mindestens zwei der genannten Isocyanate miteinander oder mit einer weiteren reaktiven Verbindung wie zum Beispiel Isocyanattrimere, Isocyanatdimere, Isocyanatoligomere, Isocyanat-funktionelle Allophanate, Isocyanat-funktionelle Biurete, Isocyanat-funktionelle Harnstoffe und Mischungen aus mindestens zwei der vorgenannten Komponenten in Betracht. Als Polyole kommen vorzugsweise Polyesterpolyole, Polyetherpolyole, Polycarbonatpolyole, Polyesterpolyamide und Mischungen aus mindestens zwei der vorgenannten Komponenten in Betracht. Als Urethanisierungskatalysatoren kommen vorzugsweise Zinnoctoat, Zinndioctoat, Zinkdioctoat, Dibutylzinndilaurat, Dimethylbis[(1-oxoneodecyl)oxy]stannan, Dimethylzinndicarboxylat, Zirkonium-bis(ethylhexanoat), Zirconium-acteylacetonat oder tertiäre Amine wie 1,4-Diazabi-cyclo[2.2.2]octan, Diazabicyclononan, Diazabicycloundecan, 1,1,3,3-Tetramethylguanidin und 1,3,4,6,7,8-Hexahydro-1-methyl-2H-pyrimido(1,2-a)pyrimidin in Betracht.

Gemäß einer weiteren Ausführungsform des Verfahrens ist das polar-protische Lösungsmittel in der zweiten Flüssigkeit Wasser, Methanol, Ethanol, n-Propanol, Isopropanol oder eine Mischung aus mindestens zwei der vorgenannten Komponenten. Bevorzugt ist hierbei Wasser und ganz bevorzugt ist die Kombination von Wasser als polar-protischem Lösungsmittel mit Aceton oder DMSO als polar-aprotischem Lösungsmittel.

Gemäß einer weiteren Ausführungsform des Verfahrens beträgt in Schritt II) die erste vorbestimmte Zeitdauer $\geq$ 1 Sekunde bis $\leq$ 120 Sekunden. Bevorzugt sind Zeiten von $\geq$ 5 Sekunden bis $\leq$ 90 Sekunden und mehr bevorzugt $\geq$ 30 Sekunden bis $\leq$ 60 Sekunden. Alternativ oder zusätzlich hierzu beträgt in Schritt III) die zweite vorbestimmte Zeitdauer $\geq$ 1 Sekunde bis $\leq$ 120 Sekunden. Bevorzugt sind Zeiten von $\geq$ 5 Sekunden bis $\leq$ 90 Sekunden und mehr bevorzugt $\geq$ 30 Sekunden bis $\leq$ 60 Sekunden.

Nach dem Schritt III) kann sich eine Lagerung des Gegenstands bei Raumtemperatur (20 °C bis 23 °C) anschließen, um eventuelle Nachvernetzungsreaktionen weiter ablaufen zu lassen, bevor der Gegenstand beispielsweise verpackt oder eingesetzt wird. Vorzugsweise dauert eine solche Lagerung mindestens 24 Stunden.

Gemäß einer weiteren Ausführungsform des Verfahrens wird nach Schritt III) der Gegenstand für eine vorbestimmte Zeitdauer auf eine Temperatur von ≥ 50 °C erwärmt. Vorzugsweise beträgt die vorbestimmte Zeitdauer ≥ 10 Minuten und mehr bevorzugt ≥ 20 Minuten. Es ist weiter bevorzugt, dass die Temperatur ≥ 100 °C beträgt. Besonders bevorzugt ist ein Erwärmen auf ≥ 100 °C bis ≤ 150 °C für ≥ 10 Minuten bis ≤ 60 Minuten. Diese Ausführungsform ist besonders vorteilhaft, wenn die erste Flüssigkeit ein Polyol und/oder ein Polyisocyanat enthält. Dann können Nachvernetzungsreaktionen beschleunigt werden. Das Gleiche gilt, wenn die zweite Flüssigkeit Wasser enthält.

Gemäß einer weiteren Ausführungsform des Verfahrens weisen die in Schritt II) mit dem Lösungsmittel kontaktieren Bereiche des Gegenstands eine Porosität Φ von ≥ 0.01 bis ≤ 0.6 auf und die Porosität Φ wird ausgedrückt als:

$$\Phi = 1 - ( \rho / \rho_0 )$$

wobei $\rho$ die Dichte des Volumens bezeichnet, welches den Abschnitten des Gegenstands zugeordnet ist, welche mit dem Lösungsmittel kontaktiert werden und $\rho_0$ die Reindichte des Aufbaumaterials bezeichnet.

Vorzugsweise beträgt die Porosität Φ ≥ 0.1 bis ≤ 0.5 und mehr bevorzugt > 0.2 bis ≤ 0.4. Bei solch porösen Volumina kann die erste Flüssigkeit auch in größerem Umfang in das Innere des Volumens eindringen und auch dort zur Modifikation der mechanischen Eigenschaften des Gegenstands führen. In Pulversinterverfahren kann durch eine bewusst niedrigere Leistung des zum Sintern verwendeten Lasers die Porosität des 3D-gedruckten Gegenstands innerhalb gewisser Grenzen gesteuert werden.

Gemäß einer weiteren Ausführungsform des Verfahrens wurde der Gegenstand wenigstens teilweise mittels eines additiven Fertigungsverfahrens unter Verwendung des Aufbaumaterials hergestellt.

In einer weiteren Ausführungsform umfasst das additive Fertigungsverfahren die Schritte:

- Auftragen einer Schicht aus das Aufbaumaterial aufweisenden Partikeln auf eine Zielfläche;

- Einwirken von Energie auf einen ausgewählten Teil der Schicht, entsprechend einem Querschnitt des Gegenstands, so dass die Partikel im ausgewählten Teil verbunden werden;

- Wiederholen der Schritte des Auftragens und des Einwirkens von Energie für eine Mehrzahl von Schichten, so dass die verbundenen Teile der benachbarten Schichten sich verbinden, um den Gegenstand zu bilden.

Gemäß dieser Ausführungsform handelt es sich um ein Pulversinter- oder Pulverschmelzverfahren. Ist die Anzahl der Wiederholungen für Auftragen und Bestrahlen hinreichend gering, kann auch von einem zweidimensionalen Gegenstand gesprochen werden, der aufgebaut werden soll. Solch ein zweidimensionaler Gegenstand lässt sich auch als Beschichtung charakterisieren. Beispielsweise können zu dessen Aufbau ≥ 2 bis ≤ 20 Wiederholungen für Auftragen und Bestrahlen durchgeführt werden.

Es ist bevorzugt, dass mindestens 90 Gewichts-% der Partikel einen Teilchendurchmesser von ≤ 0.25 mm, bevorzugt ≤ 0.2 mm, besonders bevorzugt ≤ 0.15 mm aufweisen. Die Energiequelle zum Verbinden der Teilchen kann elektromagnetische Energie wie zum Beispiel UV- bis IR-Licht sein. Denkbar ist auch ein Elektronenstrahl. Das Verbinden der Partikel im bestrahlten Teil der Partikelschicht erfolgt üblicherweise durch (teilweises) Aufschmelzen eines (teil)kristallinen Materials und Verbinden des Materials beim Abkühlen. Es ist aber auch möglich, dass andere Gestaltumwandlungen der Partikel wie ein Glasübergang, das heißt das Erwärmen des Materials auf eine Temperatur oberhalb der Glasübergangstemperatur, eine Verbindung der Partikel untereinander bewirken.

In einer weiteren Ausführungsform umfasst das Einwirken von Energie auf einen ausgewählten Teil der Schicht, entsprechend einem Querschnitt des Gegenstandes, so dass die Partikel im ausgewählten Teil verbunden werden, den folgenden Schritt:

- Bestrahlen eines ausgewählten Teils der Schicht, entsprechend einem Querschnitt des Gegenstandes, mit einem Energiestrahl, so dass die Partikel im ausgewählten Teil verbunden werden.

Diese Verfahrensform kann als selektives Sinterverfahren, insbesondere als selektives Lasersinterverfahren (SLS) angesehen werden. Der Energiestrahl zum Verbinden der Teilchen kann ein Strahl elektromagnetischer Energie wie zum Beispiel ein "Lichtstrahl" von UV- bis IR-Licht sein. Vorzugsweise ist der Energiestrahl ein Laserstrahl, besonders bevorzugt mit einer Wellenlänge zwischen 600 nm und 15 $\mu$m. Der Laser kann als Halbleiterlaser oder als Gaslaser ausgeführt sein. Denkbar ist auch ein Elektronenstrahl.

In einer weiteren Ausführungsform umfasst das Einwirken von Energie auf einen ausgewählten Teil der Schicht, entsprechend einem Querschnitt des Gegenstandes, so dass die Partikel im ausgewählten Teil verbunden werden, die folgenden Schritte:

- Auftragen einer Flüssigkeit auf einen ausgewählten Teil der Schicht, entsprechend einem Querschnitt des Gegenstandes, wobei die Flüssigkeit die Absorption von Energie in den von ihr kontaktierten Bereichen der Schicht relativ zu den nicht von ihr kontaktierten Bereichen erhöht;

- Bestrahlen der Schicht, so dass die Partikel in von der Flüssigkeit kontaktierten Bereichen der Schicht miteinander verbunden werden und die Partikel in nicht von der Flüssigkeit kontaktierten Bereichen der Schicht nicht miteinander verbunden werden.

Bei dieser Ausführungsform kann beispielsweise eine Flüssigkeit enthaltend einen IR-Absorber mittels Inkjet-Verfahren auf die Schicht aufgetragen werden. Das Bestrahlen der Schicht führt zu einer selektiven Erwärmung derjenigen Partikel, welche in Kontakt mit der Flüssigkeit samt IR-Absorber stehen. Auf diese Weise kann ein Verbinden der Partikel erreicht werden. Optional kann zusätzlich eine zweite Flüssigkeit eingesetzt werden, die hinsichtlich des Verhaltens gegenüber der verwendeten Energie komplementär zur Energie absorbierenden Flüssigkeit ist. In Bereichen, in denen die zweite Flüssigkeit aufgetragen wird, wird die eingesetzte Energie nicht absorbiert, sondern reflektiert. Die unter der zweiten Flüssigkeit liegenden Bereiche werden somit abgeschattet. Auf diese Weise kann die Trennschärfe gegenüber aufzuschmelzenden und nicht aufzuschmelzenden Bereichen der Schicht erhöht werden.

In einer weiteren Ausführungsform umfasst das additive Fertigungsverfahren die Schritte:

- Auftragen eines Filaments des zumindest teilweise geschmolzenen Aufbaumaterials auf einen Träger, so dass eine Lage des Aufbaumaterials erhalten wird, welche einem ersten ausgewählten Querschnitt des Gegenstands entspricht;

- Auftragen eines Filaments des zumindest teilweise geschmolzenen Aufbaumaterials auf eine zuvor aufgetragene Lage des Aufbaumaterials, so dass eine weitere Lage des Aufbaumaterials erhalten wird, welche einem weiteren ausgewählten Querschnitt des Gegenstands entspricht und welche mit der zuvor aufgetragenen Lage verbunden ist;

- Wiederholen des Schritts des Auftragens eines Filaments des zumindest teilweise geschmolzenen Aufbaumaterials auf eine zuvor aufgetragene Lage des Aufbaumaterials, bis der Gegenstand gebildet ist.

Bei dieser Ausführungsform handelt es sich um ein Schmelzschichtungs- oder Fused Deposition Modeling (FDM)-Verfahren. Ist die Anzahl der Wiederholungen für das Auftragen hinreichend gering, kann auch von einem zweidimensionalen Gegenstand gesprochen werden, der aufgebaut werden soll. Solch ein zweidimensionaler Gegenstand lässt sich auch als Beschichtung charakterisieren. Beispielsweise können zu dessen Aufbau $\geq 2$ bis $\leq 20$ Wiederholungen für das Auftragen durchgeführt werden.

Die einzelnen Filamente, welche aufgetragen werden, können einen Durchmesser von $\geq 30~\mu m$ bis $\leq 2000~\mu m$ aufweisen, bevorzugt $> 40~\mu m$ bis $\leq 1000~\mu m$ und besonders bevorzugt $> 50~\mu m$ bis $\leq 500~\mu m$.

Der erste Schritt dieser Ausführungsform des Verfahrens betrifft den Aufbau der ersten Lage auf einen Träger. Anschließend wird der zweite Schritt so lange ausgeführt, in dem auf zuvor aufgetragene lagen des Aufbaumaterials weiter Lagen aufgetragen werden, bis das gewünschte Endergebnis in Form des Gegenstands erhalten wird. Das zumindest teilweise aufgeschmolzene Aufbaumaterial verbindet sich mit bereits bestehenden Lagen des Materials, um eine Struktur in z-Richtung aufzubauen.

Gemäß einer weiteren Ausführungsform des Verfahrens umfasst das Aufbaumaterial ein thermoplastisches Polyurethan-Elastomer, welches

einen Schmelzbereich (DSC, Differential Scanning Calorimetry; zweite Aufheizung mit Aufheizrate 5 K/min) von $\geq 20~°C$ bis $\leq 240~°C$ (bevorzugt $\geq 40~°C$ bis $\leq 220~°C$, mehr bevorzugt $\geq 70~°C$ bis $\leq 200~°C$) aufweist,

eine Shore-Härte gemäß DIN ISO 7619-1 von $\geq 40$ A bis $\leq 85$ D (bevorzugt $> 50$ Shore Abis $\leq 80$ Shore D, mehr bevorzugt $> 60$ Shore A bis $\leq 75$ Shore D) aufweist,

bei einer Temperatur T eine Schmelzvolumenrate (melt volume rate, MVR) gemäß ISO 1133 (10 kg) von 5 bis 15 (bevorzugt $\geq 6$ bis $\leq 12$, mehr bevorzugt $\geq 7$ bis $\leq 10$) $cm^3/10$ min aufweist und

eine Änderung der Schmelzvolumenrate (10 kg) bei einer Erhöhung dieser Temperatur T um 20 °C von $\leq 90$ (bevorzugt $< 70$, mehr bevorzugt $< 50$) $cm^3/10$ min aufweist.

Bei der DSC-Messung wird das Material folgendem Temperaturzyklus unterworfen: 1 Minute bei minus 60 °C, danach Aufheizen auf 220 °C mit 20 Kelvin/Minute, dann Abkühlen auf minus 60 °C mit 5 Kelvin/Minute, dann 1 Minute bei minus 60 °C, dann Aufheizen auf 220 °C mit 20 Kelvin/Minute.

Dieses thermoplastische Polyurethanelastomer weist ein flaches Aufschmelzverhalten auf. Das Aufschmelzverhalten wird über die Änderung des MVR (melt volume rate) gemäß ISO 1133 bei 5 Minuten Vorheizzeit und 10 kg in Abhängigkeit von der Temperatur bestimmt. Als "flach" gilt ein Aufschmelzverhalten dann, wenn der MVR bei einer Ausgangstemperatur $T_x$ einen Ausgangswert von 5 bis 15 cm$^3$/10 min aufweist und durch Temperaturerhöhung um 20 °C auf $T_{x+20}$ um nicht mehr als 90 cm$^3$/10 min steigt.

Gemäß einer weiteren Ausführungsform des Verfahrens umfasst das Aufbaumaterial ein thermoplastisches Polyurethan-Elastomer, welches einen Schmelzbereich (DSC, differential scanning calorimetry; 2. Aufheizung mit Aufheizrate 5 K/min.) von ≥ 20 °C bis ≤ 100 °C aufweist und einen Betrag der komplexen Viskosität $|\eta^*|$ (bestimmt durch Viskosimetriemessung in der Schmelze mit einem Platte/Platte-Oszillationsscherviskosimeter bei 100 °C und einer Kreisfrequenz von 1/s) von ≥ 10 Pas bis ≤ 1000000 Pas aufweist.

Dieses thermoplastische Elastomer weist einen Schmelzbereich von ≥ 20 °C bis ≤ 100 °C, vorzugsweise von ≥ 25 °C bis ≤ 90 °C und mehr bevorzugt von ≥ 30 °C bis ≤ 80 °C auf. Bei der DSC-Messung zur Bestimmung des Schmelzbereichs wird das Material folgendem Temperaturzyklus unterworfen: 1 Minute bei -60 °C, danach Aufheizen auf 200 °C mit 5 Kelvin/Minute, dann Abkühlen auf -60 °C mit 5 Kelvin/Minute, dann 1 Minute bei -60 °C, dann Aufheizen auf 200 °C mit 5 Kelvin/Minute.

Es ist möglich, dass das Temperaturintervall zwischen Beginn des Schmelzvorgangs und Ende des Schmelzvorgangs, wie es gemäß dem obigen DSC-Protokoll bestimmt werden kann, < 20 °C, bevorzugt < 10 °C und mehr bevorzugt < 5 °C beträgt.

Dieses thermoplastische Elastomer weist ferner einen Betrag der komplexen Viskosität $|\eta^*|$ (bestimmt durch Viskosimetriemessung in der Schmelze mit einem Platte/Platte-Oszillationsviskosimeter gemäß ISO 6721-10:2015-09 bei 100 °C und einer Kreisfrequenz von 1/s) von ≥ 10 Pas bis ≤ 1000000 Pas auf. Vorzugsweise beträgt $|\eta^*|$ ≥ 100 Pas bis ≤ 500000 Pas, mehr bevorzugt ≥ 1000 Pas bis ≤ 200000 Pas.

Der Betrag der komplexen Viskosität $|\eta^*|$ beschreibt das Verhältnis der viskoelastischen Moduln $G'$ (Speichermodul) und $G''$ (Verlustmodul) zur Anregungsfrequenz $\omega$ in einer dynamisch-mechanischen Materialanalyse:

$$|\eta^*| = \sqrt{\left[\left(\frac{G'}{\omega}\right)^2 + \left(\frac{G''}{\omega}\right)^2\right]} = \frac{|G^*|}{\omega}$$

Gemäß einer weiteren Ausführungsform des Verfahrens umfasst das Aufbaumaterial ein thermoplastisches Polyurethan-Elastomer, das erhältlich ist aus der Reaktion einer Polyisocyanatkomponente und einer Polyolkomponente, wobei die Polyolkomponente ein Polyesterpolyol umfasst, welches einen Stockpunkt (ASTM D5985) von ≥ 25 °C aufweist.

Gegebenenfalls können bei der Reaktion zu diesem Polyurethan weiterhin Diole des Molekulargewichtsbereichs von ≥ 62 bis ≤ 600 g/mol als Kettenverlängerungsmittel eingesetzt werden.

Diese Polyisocyanatkomponente kann ein symmetrisches Polyisocyanat und/oder ein nichtsymmetrisches Polyisocyanat umfassen. Beispiele für symmetrische Polyisocyanate sind 4,4'-MDI und HDI.

Bei nicht-symmetrischen Polyisocyanaten ist die sterische Umgebung einer NCO-Gruppe im Molekül von der sterischen Umgebung einer weiteren NCO Gruppe verschieden. Es reagiert dann eine Isocyanatgruppe schneller mit gegenüber Isocyanaten reaktiven Gruppen, beispielsweise OH- Gruppen, während die verbleibende Isocyanatgruppe weniger reaktiv ist. Eine Folge des nicht-symmetrischen Aufbaus des Polyisocyanats ist, dass die mit diesen Polyisocyanaten aufgebauten Polyurethane auch eine weniger gerade Struktur aufweisen.

Bevorzugt sind 4,4'-MDI oder eine Mischung enthaltend IPDI und HDI und/oder PDI als Polyisocyanatkomponente.

Diese Polyolkomponente weist ein Polyesterpolyol auf, welches einen Stockpunkt (No Flow Point, ASTM D5985) von ≥ 25 °C, vorzugsweise ≥ 35 °C, mehr bevorzugt ≥ 35 °C bis ≤ 55 °C aufweist. Zur Bestimmung des Stockpunkts wird ein Messgefäß mit der Probe in eine langsame Rotation (0.1 U/min) versetzt. Ein flexibel gelagerter Messkopf taucht in die Probe ein und wird bei Erreichen des Stockpunkts durch die sprunghafte Zunahme der Viskosität aus seiner Lage wegbewegt, die resultierende Kippbewegung löst einen Sensor aus.

Beispiele für Polyesterpolyole, welche solch einen Stockpunkt aufweisen können, sind Reaktionsprodukte von Phthalsäure, Phthalsäureanhydrid oder symmetrischen $\alpha,\omega$-C$_4$- bis C$_{10}$-Dicarbonsäuren mit einem oder mehreren C$_2$- bis C$_{10}$-Diolen. Sie weisen bevorzugt ein zahlenmittleres Molekulargewicht $M_n$ von ≥ 400 g/mol bis ≤ 6000 g/mol auf. Geeignete Diole sind insbesondere Monoethylenglykol, 1,4-Butandiol, 1,6-Hexandiol und Neopentylglykol.

Bevorzugte Polyesterpolyole sind nachfolgend unter Angabe ihrer Säure- und Diolkomponenten angegeben: Adipinsäure + Monoethylenglykol; Adipinsäure + Monoethylenglykol + 1,4-Butandiol; Adipinsäure + 1,4-Butandiol; Adipinsäure + 1,6-Hexandiol + Neopentylglykol; Adipinsäure + 1,6-Hexandiol; Adipinsäure + 1,4-Butandiol + 1,6-Hexandiol; Phthalsäure(anhydrid) + Monoethylenglykol + Trimethylolpropan; Phthalsäure(anhydrid) + Monoethylenglykol.

Besonders bevorzugt ist die Kombination einer Mischung enthaltend IPDI und HDI als Polyisocyanatkomponente mit einem Polyesterpolyol aus Adipinsäure + 1,4-Butandiol + 1,6-Hexandiol zum Aufbau der Polyurethane.

Im erfindungsgemäßen Verfahren bevorzugt ist die Kombination:

- Selektives Lasersinterverfahren zur Herstellung des Gegenstands;

- Aufbaumaterial enthaltend Polyurethan, das erhältlich ist aus der Reaktion einer Polyisocyanatkomponente und einer Polyolkomponente, wobei die Polyisocyanatkomponente ein HDI und IPDI umfasst und wobei die Polyolkomponente ein Polyesterpolyol umfasst, welches aus der Reaktion einer Reaktionsmischung umfassend Adipinsäure sowie 1,6-Hexandiol und 1,4-Butandiol mit einem Molverhältnis dieser Diole von $\geq$ 1:4 bis $\leq$ 4:1 erhältlich ist und welches ein zahlenmittleres Molekulargewicht $M_n$ (GPC, gegen Polystyrol-Standards) von $\geq$ 4000 g/mol bis $\leq$ 6000 g/mol aufweist.

Im erfindungsgemäßen Verfahren ist ebenfalls die Kombination bevorzugt:

- Schmelzschichtungsverfahren zur Herstellung des Gegenstands;

- Aufbaumaterial enthaltend Polyurethan, das erhältlich ist aus der Reaktion einer Polyisocyanatkomponente und einer Polyolkomponente, wobei die Polyisocyanatkomponente ein HDI und IPDI umfasst und wobei die Polyolkomponente ein Polyesterpolyol umfasst, welches aus der Reaktion einer Reaktionsmischung umfassend Adipinsäure sowie 1,6-Hexandiol und 1,4-Butandiol mit einem Molverhältnis dieser Diole von $\geq$ 1:4 bis $\leq$ 4:1 erhältlich ist und welches ein zahlenmittleres Molekulargewicht $M_n$ (GPC, gegen Polystyrol-Standards) von $\geq$ 4000 g/mol bis $\leq$ 6000 g/mol aufweist.

Im erfindungsgemäßen Verfahren ebenfalls bevorzugt ist die Kombination:

- Selektives Lasersinterverfahren zur Herstellung des Gegenstands;

- Aufbaumaterial enthaltend Polyurethan, das erhältlich ist aus der Reaktion einer Polyisocyanatkomponente und einer Polyolkomponente, wobei die Polyisocyanatkomponente ein MDI (vorzugsweise 4,4'-MDI) umfasst und wobei die Polyolkomponente ein Polyesterpolyol umfasst, welches aus der Reaktion einer Reaktionsmischung umfassend Adipinsäure sowie 1,6-Hexandiol und 1,4-Butandiol mit einem Molverhältnis dieser Diole von $\geq$ 1:4 bis $\leq$ 4:1 erhältlich ist und welches ein zahlenmittleres Molekulargewicht $M_n$ (GPC, gegen Polystyrol-Standards) von $\geq$ 4000 g/mol bis $\leq$ 6000 g/mol aufweist.

Im erfindungsgemäßen Verfahren ebenfalls bevorzugt ist die Kombination:

- Schmelzschichtungsverfahren zur Herstellung des Gegenstands;

- Aufbaumaterial enthaltend Polyurethan, das erhältlich ist aus der Reaktion einer Polyisocyanatkomponente und einer Polyolkomponente, wobei die Polyisocyanatkomponente ein MDI (vorzugsweise 4,4'-MDI) umfasst und wobei die Polyolkomponente ein Polyesterpolyol umfasst, welches aus der Reaktion einer Reaktionsmischung umfassend Adipinsäure sowie 1,6-Hexandiol und 1,4-Butandiol mit einem Molverhältnis dieser Diole von $\geq$ 1:4 bis $\leq$ 4:1 erhältlich ist und welches ein zahlenmittleres Molekulargewicht $M_n$ (GPC, gegen Polystyrol-Standards) von $\geq$ 4000 g/mol bis $\leq$ 6000 g/mol aufweist.

Die Erfindung betrifft weiterhin einen zumindest teilweise modifizierten Gegenstand, der durch ein erfindungsgemäßes Verfahren erhalten wurde. Gemäß einer Ausführungsform weisen diejenigen Abschnitte des Gegenstands, welche durch das erfindungsgemäße Verfahren modifiziert wurden, eine höhere Zugfestigkeit (DIN 53504) und/oder eine höhere Reißdehnung (DIN 53504) auf als korrespondierende Abschnitte an einem unmodifizierten, aber ansonsten identischen Gegenstand.

Beispiele

Die vorliegende Erfindung wird anhand der nachfolgenden Beispiele näher erläutert, ohne jedoch darauf beschränkt zu sein.

In den Beispielen wurden die folgenden thermoplastischen Polyurethan-Materialien eingesetzt:

| Beispiel Nr. | Material |
|---|---|
| 1 | Esterbasiertes TPU mit einer Shore D-Härte von 59 (gemessen an einer spritzgegossenen Probe gemäß DIN ISO 7619-1, 1 Sekunde Testzeit) und einer Glasübergangstemperatur von ca. -13 °C (gemessen an einer spritzgegossenen Probe in Anlehnung an DIN ISO 671-1, Frequenz 1 Hz) |
| 2 | Luvosint X92 A-2 (Lehmann & Voss). Esterbasiertes TPU. Dieses Material hatte gemäß den Angaben im Datenblatt eine Glasübergangstemperatur (ISO 6721-1) von -13.6 °C, eine Schmelzvolumenrate MVR 190 °C/2.16 kg (ISO 1133) von 18 cm$^3$/min und eine Shore A-Härte (ISO 868) eines lasergesinterten Bauteils von 88. |
| 3 | Etherbasiertes TPU mit einer Shore A-Härte von 72 (gemessen an einer lasergesinterten Probe gemäß DIN ISO 7619-1, 3 Sekunden Testzeit) und einer Glasübergangstemperatur von ca. -37 °C (gemessen an einer spritzgegossenen Probe in Anlehnung an DIN ISO 671-1, Frequenz 1 Hz) |
| 4 | Etherbasiertes TPU mit einer Shore D-Härte von 70-74 (gemessen an einer spritzgegossenen Probe gemäß DIN ISO 7619-1, 1 Sekunde Testzeit) und einer Glasübergangstemperatur von ca. 60 °C (gemessen an einer spritzgegossenen Probe in Anlehnung an DIN ISO 671-1, Frequenz 1 Hz) |
| 5 | Etherbasiertes TPU mit einer Shore D-Härte von 65 (gemessen an einer lasergesinterten Probe gemäß DIN ISO 7619-1, 1 Sekunde Testzeit) und einer Glasübergangstemperatur von ca. 60 °C (gemessen an einer spritzgegossenen Probe in Anlehnung an DIN ISO 671-1, Frequenz 1 Hz) |

Die TPU-Materialien wurden zu S2-Probenkörpern verarbeitet. Die Herstellung dieser Probenkörper erfolgte auf einem Pulver-SLS-Gerät oder, im Fall des Beispiels 4, auf einem FDM-Gerät.

In den einzelnen Beispielen wurden die Probenkörper hinsichtlich ihrer Oberflächenbeschaffenheit visuell und haptisch beurteilt. Weiterhin wurden Zugfestigkeiten und Reißdehnungen im Zugversuch gemäß DIN 53504 ermittelt. Nach Bestimmen von Ausgangswerten ("Nullwerten") wurden die Probenkörper für die angegebenen Zeiten in Aceton oder Dimethylsulfoxid eingetaucht, anschließend mit Wasser gespült und im Anschluss bei 30 °C im Verlauf von 24 Stunden im Umlufttrockenschrank getrocknet. Die so behandelten Probenkörper wurden erneut hinsichtlich ihrer Oberflächenbeschaffenheit visuell und haptisch beurteilt und es wurden Zugfestigkeiten und Reißdehnungen bestimmt.

Die Skala für die Bewertung der Oberflächen der gedruckten Probenkörper lautete:

| 0 | Ausgangszustand: rau, pulverig, hinterlässt Pulverteilchen |
|---|---|
| 1 | rau, kein loses Pulver mehr vorhanden |
| 2 | nicht mehr so rau wie der Ausgangszustand, kein loses Pulver mehr |
| 3 | fühlt sich leicht geglättet an, Pulverstruktur an der Oberfläche noch erkennbar, kein loses Pulver mehr |
| 4 | Oberfläche fühlt sich fast glatt an, kein loses Pulver mehr |
| 5 | Oberfläche fühlt sich komplett glatt an, keine Struktur und kein loses Pulver mehr |

| Beispiel Nr. | Lösungsmittel | Eintauchdauer [s] | Wert gemäß Skala |
|---|---|---|---|
| 1 | Aceton | 30 | 1 |
| 1 | DMSO | 30 | 3 |
| 2 | Aceton | 30 | 1 |
| 2 | DMSO | 30 | 3 |
| 3 | Aceton | 30 | 2 |
| 3 | DMSO | 30 | 5 |
| 5 | Aceton | 30 | 1 |
| 5 | DMSO | 30 | 5 |

In allen Beispielen betrug die Einstufung des Probenkörpers für den Nullwert "0".

Beispiel 1:

| Lösungsmittel | Eintauchdauer [s] | Zugfestigkeit [N/mm$^2$] | Abweichung der Zugfestigkeit zum Nullwert [%] | Reißdehnung [%] | Abweichung der Reißdehnung zum Nullwert [%] |
|---|---|---|---|---|---|
| Nullwert | | 2,21 | | 14,4 | |
| Aceton | 30 | 2,57 | 16,29 | 18,89 | 31,18 |
| | 60 | 2,35 | 6,33 | 18,49 | 28,40 |
| | | | | | |
| DMSO | 15 | 2,53 | 14,48 | 24,67 | 71,32 |
| | 30 | 2,44 | 10,41 | 20,21 | 40,35 |
| | 45 | 2,6 | 17,65 | 24,19 | 67,99 |
| | 60 | 2,82 | 27,60 | 28,16 | 95,56 |

Beispiel 2:

| LösungsMittel | Eintauchdauer [s] | Zugfestigkeit [N/mm$^2$] | Abweichung der Zugfestigkeit zum Nullwert [%] | Reißdehnung [%] | Abweichung der Reißdehnung zum Nullwert [%] |
|---|---|---|---|---|---|
| Nullwert | | 2,81 | | 74,18 | |
| Aceton | 30 | 3,06 | 8,90 | 98,33 | 32,56 |
| | 60 | 3,44 | 22,42 | 98,11 | 32,26 |
| | | | | | |
| DMSO | 30 | 3,13 | 11,39 | 118,23 | 59,38 |
| | 45 | 3,57 | 27,05 | 109,88 | 48,13 |
| | 60 | 3,32 | 18,15 | 121,46 | 63,74 |

Beispiel 3:

| Lösungsmittel | Eintauchdauer [s] | Zugfestigkeit [N/mm$^2$] | Abweichung der Zugfestigkeit zum Nullwert [%] | Reißdehnung [%] | Abweichung der Reißdehnung zum Nullwert [%] |
|---|---|---|---|---|---|
| Nullwert | | 3,06 | | 119,32 | |
| Aceton | 30 | 3,19 | 4,25 | 145,46 | 21,91 |
| | | | | | |
| DMSO | 15 | 3,34 | 9,15 | 134,25 | 12,51 |
| | 30 | 3,63 | 18,63 | 147,47 | 23,59 |

Beispiel 4:

| Lösungsmittel | Eintauchdauer [s] | Zugfestigkeit [N/mm$^2$] | Abweichung der Zugfestigkeit zum Nullwert [%] | Reißdehnung [%] | Abweichung der Reißdehnung zum Nullwert [%] |
|---|---|---|---|---|---|
| Nullwert | | 4,65 | | 4,44 | |
| | | | | | |
| DMSO | 15 | 5,58 | 20,00 | 8,6 | 93,69 |
| | 30 | 5,18 | 11,40 | 7,36 | 65,77 |
| | 45 | 5,58 | 20,00 | 7,4 | 66,67 |

Beispiel 5:

| Lösungsmittel | Eintauchdauer [s] | Zugfestigkeit [N/mm$^2$] | Abweichung der Zugfestigkeit zum Nullwert [%] | Reißdehnung [%] | Abweichung der Reißdehnung zum Nullwert [%] |
|---|---|---|---|---|---|
| Nullwert | | 2,54 | | 3,82 | |
| Aceton | 30 | 2,81 | 10,63 | 4,41 | 15,45 |
| | | | | | |
| DMSO | 15 | 2,55 | 0,39 | 18,78 | 391,62 |
| | 30 | 2,62 | 3,15 | 13,99 | 266,23 |
| | 45 | 2,8 | 10,24 | 17,98 | 370,68 |
| | 60 | 2,41 | -5,12 | 19,38 | 407,33 |

**Patentansprüche**

1. Verfahren zur Modifizierung eines Gegenstands, umfassend den Schritt:

    I) Bereitstellen eines Gegenstandes, welcher wenigstens teilweise aus einem ein thermoplastisches Polyurethan umfassenden Aufbaumaterial aufgebaut ist,

    **dadurch gekennzeichnet, dass**
    das Verfahren weiterhin die Schritte umfasst:

    II) zumindest teilweises Kontaktieren des Aufbaumaterials, für eine erste vorbestimmte Zeitdauer, mit einer ersten Flüssigkeit, welche zu ≥ 80 Gewichts-%, bezogen auf das Gesamtgewicht der ersten Flüssigkeit, ein polar-aprotisches Lösungsmittel enthält;
    III) Kontaktieren, für eine zweite vorbestimmte Zeitdauer, der in Schritt II) mit der ersten Flüssigkeit kontaktieren Bereiche des Aufbaumaterials mit einer zweiten Flüssigkeit, welche zu ≥ 80 Gewichts-%, bezogen auf das Gesamtgewicht der zweiten Flüssigkeit, ein polar-protisches Lösungsmittel enthält.

2. Verfahren gemäß Anspruch 1, wobei das polar-aprotische Lösungsmittel in der ersten Flüssigkeit Aceton, Methylethylketon, Dimethylsulfoxid oder deren Mischung ist.

3. Verfahren gemäß einem der vorhergehenden Ansprüche, wobei die erste Flüssigkeit weiterhin Wasser, ein Polyisocyanat, ein Polyol oder eine Mischung aus mindestens zwei der vorgenannten Komponenten enthält.

4.  Verfahren gemäß einem der vorhergehenden Ansprüche, wobei das polar-protische Lösungsmittel in der zweiten Flüssigkeit Wasser, Methanol, Ethanol, n-Propanol, Isopropanol oder eine Mischung aus mindestens zwei der vorgenannten Komponenten ist.

5.  Verfahren gemäß einem der vorhergehenden Ansprüche, wobei in Schritt II) die erste vorbestimmte Zeitdauer ≥ 1 Sekunde bis ≤ 120 Sekunden beträgt und/oder wobei in Schritt III) die zweite vorbestimmte Zeitdauer ≥ 1 Sekunde bis ≤ 120 Sekunden beträgt.

6.  Verfahren gemäß einem der vorhergehenden Ansprüche, wobei nach Schritt III) der Gegenstand für eine vorbestimmte Zeitdauer auf eine Temperatur von ≥ 50 °C erwärmt wird.

7.  Verfahren gemäß einem der vorhergehenden Ansprüche, wobei die in Schritt II) mit dem Lösungsmittel kontaktieren Bereiche des Aufbaumaterials eine Porosität Φ von ≥ 0.01 bis ≤ 0.6 aufweisen und die Porosität Φ ausgedrückt wird als:

$$\Phi = 1 - ( \rho / \rho_0 )$$

wobei $\rho$ die Dichte des Volumens bezeichnet, welches den Abschnitten des Gegenstands zugeordnet ist, welche mit dem Lösungsmittel kontaktiert werden und $\rho_0$ die Reindichte des Aufbaumaterials bezeichnet.

8.  Verfahren gemäß einem der vorhergehenden Ansprüche, wobei der Gegenstand wenigstens teilweise mittels eines additiven Fertigungsverfahrens unter Verwendung des Aufbaumaterials hergestellt wurde.

9.  Verfahren gemäß Anspruch 8, wobei das additive Fertigungsverfahren die Schritte umfasst:

    - Auftragen einer Schicht aus das Aufbaumaterial aufweisenden Partikeln auf eine Zielfläche;
    - Einwirken von Energie auf einen ausgewählten Teil der Schicht, entsprechend einem Querschnitt des Gegenstands, so dass die Partikel im ausgewählten Teil verbunden werden;
    - Wiederholen der Schritte des Auftragens und des Einwirkens von Energie für eine Mehrzahl von Schichten, so dass die verbundenen Teile der benachbarten Schichten sich verbinden, um den Gegenstand zu bilden.

10. Verfahren gemäß Anspruch 9, wobei das Einwirken von Energie auf einen ausgewählten Teil der Schicht, entsprechend einem Querschnitt des Gegenstandes, so dass die Partikel im ausgewählten Teil verbunden werden, den folgenden Schritt umfasst:

    - Bestrahlen eines ausgewählten Teils der Schicht, entsprechend einem Querschnitt des Gegenstandes, mit einem Energiestrahl, so dass die Partikel im ausgewählten Teil verbunden werden.

11. Verfahren gemäß Anspruch 9, wobei das Einwirken von Energie auf einen ausgewählten Teil der Schicht, entsprechend einem Querschnitt des Gegenstandes, so dass die Partikel im ausgewählten Teil verbunden werden, die folgenden Schritte umfasst:

    - Auftragen einer Flüssigkeit auf einen ausgewählten Teil der Schicht, entsprechend einem Querschnitt des Gegenstandes, wobei die Flüssigkeit die Absorption von Energie in den von ihr kontaktierten Bereichen der Schicht relativ zu den nicht von ihr kontaktierten Bereichen erhöht;
    - Bestrahlen der Schicht, so dass die Partikel in von der Flüssigkeit kontaktierten Bereichen der Schicht miteinander verbunden werden und die Partikel in nicht von der Flüssigkeit kontaktierten Bereichen der Schicht nicht miteinander verbunden werden.

12. Verfahren gemäß Anspruch 8, wobei das additive Fertigungsverfahren die Schritte umfasst:

    - Auftragen eines Filaments des zumindest teilweise geschmolzenen Aufbaumaterials auf einen Träger, so dass eine Lage des Aufbaumaterials erhalten wird, welche einem ersten ausgewählten Querschnitt des Gegenstands entspricht;
    - Auftragen eines Filaments des zumindest teilweise geschmolzenen Aufbaumaterials auf eine zuvor aufgetragene Lage des Aufbaumaterials, so dass eine weitere Lage des Aufbaumaterials erhalten wird, welche einem weiteren ausgewählten Querschnitt des Gegenstands entspricht und welche mit der zuvor aufgetragenen Lage verbunden ist;
- Wiederholen des Schritts des Auftragens eines Filaments des zumindest teilweise geschmolzenen Aufbaumaterials auf eine zuvor aufgetragene Lage des Aufbaumaterials, bis der Gegenstand gebildet ist.

**13.** Verfahren gemäß einem der vorhergehenden Ansprüche, wobei das Aufbaumaterial ein thermoplastisches Polyurethan-Elastomer umfasst, welches

einen Schmelzbereich (DSC, Differential Scanning Calorimetry; zweite Aufheizung mit Aufheizrate 5 K/min) von $\geq$ 20 °C bis $\leq$ 240 °C aufweist,
eine Shore A Härte gemäß DIN ISO 7619-1 von > 40 A bis < 85 D aufweist,
bei einer Temperatur T eine Schmelzvolumenrate (melt volume rate, MVR) gemäß ISO 1133 (10 kg) von 5 bis 15 cm$^3$/10 min aufweist und
eine Änderung der Schmelzvolumenrate (10 kg) bei einer Erhöhung dieser Temperatur T um 20 °C von $\leq$ 90 cm$^3$/10 min aufweist.

**14.** Zumindest teilweise modifizierter Gegenstand, erhalten durch ein Verfahren gemäß einem der Ansprüche 1 bis 13.

**15.** Gegenstand gemäß Anspruch 14, wobei diejenigen Abschnitte des Gegenstands, welche durch ein Verfahren gemäß einem der Ansprüche 1 bis 13 modifiziert wurden, eine höhere Zugfestigkeit gemäß DIN 53504 und/oder eine höhere Reißdehnung gemäß DIN 53504 aufweisen als korrespondierende Abschnitte an einem unmodifizierten, aber ansonsten identischen Gegenstand.

**Claims**

**1.** Process for modifying an article comprising the step of:

I) providing an article which is at least partially constructed from a build material comprising a thermoplastic polyurethane,

**characterized in that**
the process further comprises the steps of:

II) at least partially contacting the build material for a first predetermined duration with a first liquid which contains $\geq$ 80% by weight based on the total weight of the first liquid of a polar aprotic solvent;
III) contacting for a second predetermined duration the regions of the build material contacted with the first liquid in step II) with a second liquid which contains $\geq$ 80% by weight based on the total weight of the second liquid of a polar protic solvent.

**2.** Process according to Claim 1, wherein the polar aprotic solvent in the first liquid is acetone, methyl ethyl ketone, dimethyl sulfoxide or a mixture thereof.

**3.** Process according to either of the preceding claims, wherein the first liquid further contains water, a polyisocyanate, a polyol or a mixture of at least two of the abovementioned components.

**4.** Process according to any of the preceding claims, wherein the polar protic solvent in the second liquid is water, methanol, ethanol, n-propanol, isopropanol or a mixture of at least two of the abovementioned components.

**5.** Process according to any of the preceding claims, wherein in step II) the first predetermined duration is $\geq$ 1 second to $\leq$ 120 seconds and/or wherein in step III) the second predetermined duration is $\geq$ 1 second to $\leq$ 120 seconds.

**6.** Process according to any of the preceding claims, wherein step III) is followed by heating of the article to a temperature of $\geq$ 50°C for a predetermined duration.

**7.** Process according to any of the preceding claims, wherein the regions of the build material contacted with the solvent in step II) have a porosity $\Phi$ of $\geq$ 0.01 to $\leq$ 0.6 and the porosity $\Phi$ is expressed as:

$$\Phi = 1 - ( \rho / \rho_0 )$$

wherein $\rho$ represents the density of the volume assigned to the sections of the article that are contacted with the solvent and $\rho_0$ represents the true density of the build material.

8. Process according to any of the preceding claims, wherein the article was at least partially produced by means of an additive manufacturing process using the build material.

9. Process according to Claim 8, wherein the additive manufacturing process comprises the steps of:

- applying a layer of particles comprising the build material to a target surface;
- energizing a selected portion of the layer corresponding to a cross section of the article to join the particles in the selected portion;
- repeating the steps of applying and energizing for a plurality of layers so that the joined portions of the adjacent layers become joined to form the article.

10. Process according to Claim 9, wherein the energizing of a selected portion of the layer corresponding to a cross section of the article to join the particles in the selected portion comprises the following step of:

- irradiating a selected portion of the layer corresponding to a cross section of the article with an energy beam to join the particles in the selected portion.

11. Process according to Claim 9, wherein the energizing of a selected portion of the layer corresponding to a cross section of the article to join the particles in the selected portion comprises the following steps of:

- applying a liquid to a selected portion of the layer corresponding to a cross section of the article, wherein the liquid increases the absorption of energy in the regions of the layer contacted by it relative to the regions not contacted by it;
- irradiating the layer so that the particles in regions of the layer contacted by the liquid are joined to one another and the particles in regions of the layer not contacted by the liquid are not joined to one another.

12. Process according to Claim 8, wherein the additive manufacturing process comprises the steps of:

- applying a filament of the at least partially molten build material to a carrier, such that a layer of the build material is obtained, corresponding to a first selected cross section of the article;
- applying a filament of the at least partially molten build material onto a previously applied layer of the build material to obtain a further layer of the build material which corresponds to a further selected cross section of the article and which is joined to the previously applied layer;
- repeating the step of applying a filament of the at least partially molten build material onto a previously applied layer of the build material until the article has been formed.

13. Process according to any of the preceding claims, wherein the build material comprises a thermoplastic polyurethane elastomer which

has a melting range (DSC, differential scanning calorimetry; second heating at a heating rate of 5 K/min) of $\geq$ 20°C to $\leq$ 240°C,
has a Shore A hardness according to DIN ISO 7619-1 of $\geq$ 40 A to $\leq$ 85 D,
has a melt volume rate (MVR) according to ISO 1133 (10 kg) at a temperature T of 5 to 15 cm$^3$/10 min and
exhibits a change in the melt volume rate (10 kg) at an increase of this temperature T by 20°C of $\leq$ 90 cm$^3$/10 min.

14. At least partially modified article obtained by a process according to any of Claims 1 to 13.

15. Article according to Claim 14, wherein the sections of the article which have been modified by a process according to any of Claims 1 to 13 have a higher tensile strength according to DIN 53504 and/or a higher breaking elongation according to DIN 53504 than corresponding sections on an unmodified but otherwise identical article.

**Revendications**

1. Procédé de modification d'un objet, comprenant l'étape :

   I) fourniture d'un objet qui est construit au moins partiellement à partir d'un matériau de construction comprenant un polyuréthane thermoplastique,

   **caractérisé en ce que**
   le procédé comprend en outre les étapes :

   II) mise en contact au moins partiel du matériau de construction, pour une première durée prédéterminée, avec un premier liquide qui contient $\geq$ 80 % en poids d'un solvant aprotique polaire, par rapport au poids total du premier liquide ;
   III) mise en contact, pour une deuxième durée prédéterminée, des zones du matériau de construction mises en contact dans l'étape II) avec le premier liquide, avec un deuxième liquide qui contient $\geq$ 80 % en poids d'un solvant protique polaire, par rapport au poids total du deuxième liquide.

2. Procédé selon la revendication 1, le solvant aprotique polaire dans le premier liquide étant l'acétone, la méthyléthylcétone, le diméthylsulfoxyde ou leur mélange.

3. Procédé selon l'une quelconque des revendications précédentes, le premier liquide contenant de plus de l'eau, un polyisocyanate, un polyol ou un mélange d'au moins deux des composants mentionnés précédemment.

4. Procédé selon l'une quelconque des revendications précédentes, le solvant protique polaire dans le deuxième liquide étant l'eau, le méthanol, l'éthanol, le n-propanol, l'isopropanol ou un mélange d'au moins deux des composants mentionnés précédemment.

5. Procédé selon l'une quelconque des revendications précédentes, dans lequel dans l'étape II) la première durée prédéterminée est $\geq$ 1 seconde à $\leq$ 120 secondes et/ou dans lequel dans l'étape III) la deuxième durée prédéterminée est de $\geq$ 1 seconde à $\leq$ 120 secondes.

6. Procédé selon l'une quelconque des revendications précédentes, dans lequel après l'étape III) l'objet est chauffé pour une durée prédéterminée à une température de $\geq$ 50 °C.

7. Procédé selon l'une quelconque des revendications précédentes, les zones du matériau de construction mises en contact avec le solvant dans l'étape II) présentant une porosité $\Phi$ de $\geq$ 0,01 à $\leq$ 0,6 et la porosité $\Phi$ étant exprimée comme :

$$\Phi = 1 - ( \rho / \rho_0 )$$
,

   $\rho$ désignant la densité du volume qui correspond aux parties de l'objet qui sont mises en contact avec le solvant et $\rho_0$ désignant la densité absolue du matériau de construction.

8. Procédé selon l'une quelconque des revendications précédentes, l'objet ayant été fabriqué au moins partiellement au moyen d'un procédé de fabrication additive en utilisant le matériau de construction.

9. Procédé selon la revendication 8, le procédé de fabrication additive comprenant les étapes :

   - dépôt d'une couche de particules présentant le matériau de construction sur une surface cible ;
   - exposition à de l'énergie d'une partie choisie de la couche correspondant à une section transversale de l'objet de sorte que les particules dans la partie choisie soient associées ;
   - répétition des étapes d'application et d'exposition à de l'énergie pour une pluralité de couches de sorte que les parties associées des couches adjacentes s'associent, afin de former l'objet.

10. Procédé selon la revendication 9, l'exposition à de l'énergie sur une partie choisie de la couche correspondant à une section transversale de l'objet de sorte que les particules dans la partie choisie soient associées, comprenant l'étape suivante :

- irradiation d'une partie choisie de la couche correspondant à une section transversale de l'objet, avec un faisceau d'énergie de sorte que les particules dans la partie choisie soient associées.

11. Procédé selon la revendication 9, l'exposition à de l'énergie sur une partie choisie de la couche correspondant à une section transversale de l'objet de sorte que les particules dans la partie choisie soient associées, comprenant les étapes suivantes

- application d'un liquide sur une partie choisie de la couche correspondant à une section transversale de l'objet, le liquide augmentant l'absorption d'énergie dans les zones de la couche mises en contact avec celui-ci par rapport aux zones non mises en contact avec celui-ci ;
- irradiation de la couche de sorte que les particules dans les zones de la couche mises en contact avec le liquide soit associées ensemble et que les particules dans les zones de la couche non mises en contact avec le liquide ne soient pas associées ensemble.

12. Procédé selon la revendication 8, le procédé de fabrication additive comprenant les étapes suivantes :

- application d'un filament du matériau de construction au moins partiellement fondu sur un support, de sorte qu'une couche du matériau de construction soit obtenue, qui correspond à une première section transversale choisie de l'objet ;
- application d'un filament du matériau de construction au moins partiellement fondu sur une couche du matériau de construction appliquée précédemment, de sorte qu'une couche supplémentaire du matériau de construction soit obtenue, qui correspond à une section transversale choisie supplémentaire de l'objet et qui est associée à la couche appliquée précédemment ;
- répétition de l'étape d'application d'un filament du matériau de construction au moins partiellement fondu sur une couche du matériau de construction appliquée précédemment, jusqu'à ce que l'objet soit formé.

13. Procédé selon l'une quelconque des revendications précédentes, le matériau de construction comprenant un élastomère de polyuréthane thermoplastique, qui présente une plage de fusion (DSC, calorimétrie différentielle à balayage ; deuxième chauffage avec une vitesse de chauffage de 5 K/min) de $\geq$ 20 °C à $\leq$ 240 °C,

présente une dureté Shore A selon la norme DIN ISO 7619-1 de $\geq$ à 40 A à $\leq$ 85 D,
présente un débit volumique à l'état fondu (débit volumique à l'état fondu, MVR) à une température T selon la norme ISO 1133 (10 kg) de 5 à 15 cm$^3$/10 min et
présente une modification du débit volumique à l'état fondu (10 kg) lors d'une élévation de cette température T de 20 °C de $\leq$ 90 cm$^3$/10 min.

14. Objet au moins partiellement modifié, obtenu par un procédé selon l'une quelconque des revendications 1 à 13.

15. Objet selon la revendication 14, dans lequel les parties de l'objet qui ont été modifiées par un procédé selon l'une quelconque des revendications 1 à 13 présentent une résistance en traction selon la norme DIN 53504 plus élevée et/ou un allongement à la rupture selon la norme DIN 53504 plus élevé que des parties correspondantes sur un objet non modifié mais par ailleurs identique.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2018095967 A1
- WO 2017196330 A1
- WO 2018119026 A
- US 2017173872 A1